# EUROPÄISCHE PATENTSCHRIFT

(11) **EP 2 303 619 B1**
(45) Veröffentlichungstag und Bekanntmachung des Hinweises auf die Patenterteilung: **16.11.2011**
(21) Anmeldenummer: 09741890.9
(22) Anmeldetag: 07.05.2009
(51) Int. Cl.: B60H 3/06, B01D 46/00

(54) **LUFTFILTER MIT FEUCHTSENSOR FÜR EINE FAHRZEUGKLIMAANLAGE SOWIE VERFAHREN ZU DEREN BETRIEB**
AIR FILTER HAVING MOISTURE SENSOR FOR A VEHICLE AIR CONDITIONER AND METHOD FOR OPERATING SAME
FILTRE À AIR AVEC CAPTEUR D'HUMIDITÉ POUR UNE INSTALLATION DE CLIMATISATION AUTOMOBILE ET PROCÉDÉ DE FONCTIONNEMENT

(30) Priorität: 08.05.2008 DE 102008022630; 28.03.2009 WO PCT/EP2009/002291
(43) Veröffentlichungstag der Anmeldung: 06.04.2011
(73) Patentinhaber: Bayerische Motoren Werke Aktiengesellschaft, 80809 München (DE)
(72) Erfinder: HOFHAUS, Joern, 85354 Freising (DE); WENDROCK, Gregor, 81827 München (DE)
(86) Internationale Anmeldenummer: PCT/EP2009/003264
(87) Internationale Veröffentlichungsnummer: WO 2009/135671

(56) Entgegenhaltungen:
- DE-A1-102005 016 393
- DE-A1-102005 042 406
- US-A1- 2006 201 120

## Beschreibung

Die vorliegende Erfindung betrifft einen Luftfilter gemäß dem Oberbegriff des Patentanspruches 1, eine Fahrzeugklimaanlage gemäß dem Oberbegriff des Patentanspruches 8 sowie ein Verfahren zum Betreiben einer Fahrzeugklimaanlage Oberbegriff des Patentanspruches 15. Die UE 10 2005 042 406 A1 offenbart einen Luftfilter gemäß obergriff des Anspruchs 1. Zum relevanten Stand der Technik zählen weiterhin. DE 36 24 171 A1, US 68 40 051 B1, DE 40 00 164 A1, WO 2000 032298 A1, EP 18 06 249 A1 sowie die US 60 52 998 A.

Ferner beschreibt die nicht vorveröffentlichte deutsche Patentanmeldung DE 10 2007 056 356.8 ein Verfahren zur Steuerung einer Fahrzeugklimaanlage, bei dem in Abhängigkeit eines Sensorsignals ein Maß für die an der Frischluftansaugöffnung der Fahrzeugklimaanlage angesaugte Wassermenge ermittelt wird. Als Sensorsignal wird z.B. das Signal eines im Spiegelbereich der Windschutzscheibe angeordneten Regensensors verwendet. Es liegt auf der Hand, dass der Regensensor zwar die im Sensorbereich der Windschutzscheibe befindliche Wassermenge misst, nicht aber exakt die im Ansaugbereich der Klimaanlage vorhandene Wassermenge bzw. Feuchtigkeit. In Abhängigkeit der vom Regensensor ermittelten Wassermenge wird die Klimaanlage derart gesteuert, dass die durch die Frischluftansaugöffnung angesaugte Luftmenge reduziert wird.

Die EP 1 246 679 B1 beschreibt ein Luftfilterelement, an dem ein Chip mit integriertem Feuchtesensor angeordnet ist. Die DE 35 17 481 beschreibt ein Verfahren zur Aufrechterhaltung der Wirksamkeit von Chemisorptionsmassen von Filtern für Kraftfahrzeugkabinen, bei dem ein Filterelement verwendet wird, auf dem ein Feuchtesensor angeordnet ist. In Abhängigkeit des vom Feuchtesensor gelieferten Signals wird eine Heizung eingeschaltet bzw. ausgeschaltet.

Aus der WO 2007/028461 A1 ist eine Filteranordnung bekannt, bei der ein Feuchtigkeitssensor an einer Aufnahme des Filterelements angeordnet ist. Der Feuchtigkeitssensor misst die Luftfeuchtigkeit des das Filterelement durchströmenden Fluids.

Die DE 102 45 911 A1 beschreibt eine optische Sensoranordnung, mittels der die Feuchtigkeitsbeladung eines Filterelements gemessen werden kann.

Die DE 101 40 510 B4 beschreibt eine Filteranordnung mit einem am Filter angeordneten Sensor, mittels dem die Luftgeschwindigkeit der durch den Filter strömenden Luft und somit indirekt die Beladung des Filterelements gemessen werden kann.

Bei den meisten Fahrzeugen erfolgt die Frischluftansaugung der Heiz-/Klimaanlage fast ausschließlich über einen Spalt zwischen der Motorhaube und der Windschutzscheibe. Bei starkem Regen oder beim Durchfahren einer Waschstraße können beträchtliche Wassermengen in den Bereich, in dem die Fahrzeugklimaanlage Frischluft ansaugt, eindringen. Mittels geeigneter technischer Maßnahmen ist zu verhindern, dass eindringendes Wasser über die Klimaanlage in den Fahrgastraum gelangt.

Aufgabe der Erfindung ist es, einen Luftfilter für eine Fahrzeugklimaanlage zu schaffen, der so beschaffen ist, dass die Fahrzeugklimaanlage möglichst exakt in Abhängigkeit von der in der angesaugten Luft bzw. im Ansaugtrakt der Fahrzeugklimaanlage enthaltenen Feuchtigkeit steuerbar bzw. regelbar ist. Eine weitere Aufgabe besteht in der Angabe eines Verfahrens zum Betreiben einer Fahrzeugklimaanlage, das den Typ des verbauten Luftfilters berücksichtigt.

Diese Aufgabe wird durch die Merkmale der Patentansprüche 1 bzw. 8 bzw. 15 gelöst. Vorteilhafte Ausgestaltungen und Weiterbildungen der Erfindung sind den Unteransprüchen zu entnehmen.

Ausgangspunkt der Erfindung kann z.B. die bereits eingangs erwähnte, ältere, nicht vorveröffentlichte deutsche Patentanmeldung DE 10 2007 056 356.8 sein, bei der die von der Klimaanlage angesaugte (Frisch-) Luftmenge in Abhängigkeit von einem Sensorsignal geregelt wird, das zumindest einigermaßen gut mit der Feuchtigkeitsbeladung der von der Klimaanlage angesaugten Luft korreliert.

Eine Ausführungsform der Erfindung besteht in einem zum Einbau in eine Fahrzeugklimaanlage vorgesehenen Luftfilter mit einem Feuchtesensor, der auf bzw. an dem Luftfilter angeordnet ist, wobei der Feuchtesensor ein Bestandteil eines auf bzw. an dem Luftfilter angeordneten "Stromkreisabschnitts" ist.

Der Begriff "Feuchtesensor" ist breit auszulegen. Ganz allgemein ist hierunter eine Messeinrichtung zu verstehen, welche das Vorhandensein von Fluiden, d.h. von Wasser oder anderen Flüssigkeiten oder von Gas, detektiert und ein der Fluidkonzentration entsprechendes oder zumindest mit der Fluidkonzentration korrelierendes Messsignal erzeugt.

Eine Fixierung des Feuchtesensors auf dem Filter ist von Vorteil, da ein zusätzlicher Halter für den Sensor entfällt und dieser günstig z.B. in der Mitte des Luftstromes positioniert werden kann. Unmittelbar am Filter herrschen aufgrund der großen Oberfläche relative geringe Strömungsgeschwindigkeiten, so dass unerwünschte Akustikeffekte durch den im Luftstrom positionierten Sensor weitgehend vermieden werden.

Der o.g. Begriff "Stromkreisabschnitt" ist breit auszulegen. Gemeint sein kann z.B. ein offener Stromkreis im Sinne eines Schaltungsabschnitts oder ein geschlossener Stromkreis, insbesondere ein Schwingkreis, d.h. ein Stromkreis, der einen ohmschen Widerstand, einen kapazitiven Widerstand und einen induktiven Widerstand aufweist. Anstatt des Begriffs Stromkreisabschnitt könnte auch einer der noch allgemeineren Begriffe "elektrische Schaltung", "Schaltungsanordnung", Schaltungsabschnitt" o.ä. verwendet werden. Ganz allgemein ist mit dem Begriff "Stromkreisabschnitt" eine elektrisch leitende Anordnung gemeint, die den Feuchtesensor enthält oder durch den Feuchtesensor gebildet ist. Der Stromkreisabschnitt kann insbesondere durch eine integrierte Schaltung gebildet sein oder eine integrierte Schaltung enthalten.

Bei dem Feuchtesensor gemäß der Erfindung kann es sich z.B. um einen ein kapazitiver Sensor handeln. Der Begriff kapazitiver Sensor ist ebenfalls breit auszulegen. Gemeint ist, dass der Feuchtesensor ein Bauelement enthält oder durch ein Bauelement gebildet ist, dessen Kapazität von der Feuchtigkeitsbeladung der ihn umströmenden Luft abhängt und somit als "Messeinrichtung" geeignet ist. Der Feuchtesensor kann durch einen elektrischen Schwingkreis gebildet sein, dessen kapazitiver Anteil bei einer Veränderung der Fluidbeladung der den Feuchtesensor umgebenden Luft sich entsprechend ändert.

Ein wesentlicher Aspekt der Erfindung ist darin zu sehen, dass mindestens eine "elektrische Eigenschaft" des Stromkreisabschnitts, insbesondere eine in dem Stromkreisabschnitt an sich dauerhaft fest implementierte "elektrische Eigenschaft" den Typ des Luftfilters repräsentiert. Der Begriff "elektrische Eigenschaft" ist äußerst breit zu verstehen. Im Prinzip kann es sich dabei um jede direkt oder indirekt mess- bzw. bestimmbare elektrische bzw. elektromagnetische Eigenschaft oder die "Größenordnung einer elektrischen oder elektromagnetischen Eigenschaft" handeln, wie z.B. das Frequenzverhalten des Stromkreisabschnitts bzw. das Amplitudenverhalten des Stromkreisabschnitts beim Durchlaufen des Frequenzbandes, insbesondere eine Eigenfrequenz des Stromkreisabschnitts, einen ohmschen Widerstand und/oder induktiven und/oder kapazitiven Widerstand bzw. einen entsprechenden Widerstandsbereich, den Wechselstromgesamtwiderstand des Stromkreisabschnitts bzw. einen entsprechenden Wechselstromgesamtwiderstandbereich etc.

Gegenstand der Erfindung ist insbesondere auch ein durch zwei oder mehrere Luftfilter gebildetes "Filterset", wobei die einzelnen Luftfilter konstruktiv und funktional jeweils für den Einbau in einen Fahrzeugklimaanlagentyp geeignet sind. Die Luftfilter eines Filtersets bzw. eines Filterbaukastens unterscheiden sich z.B. hinsichtlich ihrer Filtereigenschaften (Mikrofilter, Pollenfilter, Bakterienfilter etc.). Indem jeden der einzelnen Luftfiltertypen eines Luftfilterbaukastens eine vorgegebene elektrische Eigenschaft bzw. eine Größenordnung einer vorgegebenen elektrischen Eigenschaft zugeordnet ist, besteht die Möglichkeit einer "automatischen Identifizierung" des tatsächlich in der Klimaanlage verbauten Luftfilters durch die Klimaanalgen- bzw. Bordelektronik des Fahrzeugs.

Vorzugsweise ist der Filtertyp über die Eigenfrequenz des Stromkreisabschnitts bzw. des Feuchtesensors "codiert". Durch Ermitteln der Eigenfrequenz bzw. der Größenordnung der Eigenfrequenz eines Stromkreises, der den Stromkreisabschnitt und somit den Feuchtesensor enthält bzw. durch den Stromkreisabschnitt bzw. den Feuchtesensor gebildet ist, kann der Typ des Luftfilters ermittelt werden.

Nach einer Weiterbildung der Erfindung ist einem bestimmten Luftfiltertyp ein vorgegebener "Wertebereich" zugeordnet ist, in dem die elektrische Eigenschaft seines Stromkreisabschnitts liegen darf. Der Wertebereich ist vorzugsweise so gewählt, dass im Normalbetrieb des Luftfilters auftretende Schwankungen der "elektrischen Eigenschaft" des Stromkreisabschnitts, die infolge von Veränderungen der Feuchtigkeitsbeladung der den Luftfilter umströmenden Luft auftreten können, innerhalb des vorgegebenen Wertebereichs liegen.

Beim Einbau des Luftfilters in eine Fahrzeugklimaanlage besteht somit die Möglichkeit, "automatisch" durch die Klimaanlagenelektronik den Typ des verbauten Luftfilters zu detektieren. Es kann also beispielsweise festgestellt werden, ob ein Originalfilter des Fahrzeugherstellers bzw. ein vom Fahrzeughersteller technisch frei gegebener Luftfilter verbaut ist. Insbesondere kann auch detektiert werden, ob ein Luftfilter verbaut ist, der der Fahrzeugelektronik nicht bekannt ist und dessen Qualität daher zweifelhaft ist. Bei Erkennen eines vom Fahrzeughersteller nicht frei gegebenen Filters durch die Bord- bzw. Klimaanlagenelektronik kann im Fahrzeug eine entsprechende Warn- bzw. Fehlermeldung erzeugt und an den Fahrer visuell, z.B. über ein Display, eine Kontrollleuchte o-ä. und/oder akustisch durch eine Sprachmitteilung ausgegeben werden.

Nach einer Weiterbildung der Erfindung weist der Feuchtesensor einen elektrischen Schwingkreis auf, dessen Kapazität bzw. dessen kapazitiver Widerstand sich entsprechend Änderungen der Feuchtigkeitsbeladung der umgebenden Luft ändert. Aufgrund dieser Variation und unter Berücksichtigung der restlichen Größen des Schwingkreises (ohmscher und induktiver Anteil) ergibt sich eine entsprechende Abhängigkeit der Eigenfrequenz des Feuchtesensorsystems von der Luftfeuchte.

Die Eigenfrequenz des den Feuchtesensor enthaltenden Stromkreisabschnitts bzw. die Eigenfrequenz eines Auswertestromkreises, der den Stromkreisabschnitt enthält, kann unmittelbar als Ausgangssignal zur weiteren Auswertung und Bestimmung der Luftfeuchte im bzw. am Luftfilter ausgegeben werden.

Desweiteren wird über die generelle Größenordnung des Frequenzbereiches, durch entsprechende Wahl der Größen des Schwingkreises, eine Unterteilung in nicht überlappende Frequenzbereiche vorgenommen um eine Klassifizierung der verschiedenen Filtertypen und damit entsprechende Einflüsse auf die Regelung, in Abhängigkeit von Filtertyp und Luftfeuchtigkeit im Sensor, möglich zu machen und vorzunehmen.

Der Luftfilter kann in einen Luftkanal der Fahrzeugklimaanlage eingesetzt sein. Durch den Feuchtesensor kann unmittelbar die Feuchtigkeitsbeladung der den Luftfilter durchströmenden Luft bzw. die Feuchtigkeitsbeladung des Luftfilters gemessen werden. Es kann vorgesehen sein, dass der Feuchtesensor im Unterschied zu den aus dem Stand der Technik bekannten Sensoren primär zur Detektierung in flüssiger Form angesaugten Wassers dient.

Vorzugsweise ist der Feuchtesensor stromaufwärts in Bezug auf den Luftfilter angeordnet. "Stromaufwärts" bedeutet auf der "Druckseite" des Luftfilters, d.h. auf derjenigen Seite des Luftfilters, die im in die Fahrzeugklimaanlage eingebauten Zustand des Luftfilters von einem Gebläse angeströmt wird. Eine Anordnung eines Feuchtesensors "stromabwärts", wie sie z.B. in der DE 10 2005 042 406 A1 erwähnt ist, wird eher als ungünstig angesehen, da der Luftfilter Wasser, das in flüssiger Form im Luftstrom enthalten ist, zumindest teilweise zurückhält. Demgegenüber hat eine stromaufwärtige Anordnung des Feuchtesensors den Vorteil, dass eventuell angesaugte Wassertropfen zunächst durch das Gebläse gesaugt und infolge der dort herrschenden hohen Scherkräfte und Turbulenzen zerstäubt werden, was dazu führt, dass die vom Gebläse kommende Luft nicht nur lokal, sondern auf nahezu gesamten Strömungsbreite des Luftkanals und somit des Luftfilters schlagartig feuchter wird.

Übersteigt die Feuchtigkeitsbeladung einen als kritisch angesehenen Wert, so kann die Elektronik einen oder mehrere Funktionsparameter der Fahrzeugklimaanlage derart steuern bzw. regeln, dass die Feuchtigkeit, die von der Klimaanlage über die in den Fahrgastraum geförderte Luft in den Fahrgastraum eingebracht wird, begrenzt bzw. reduziert wird. So kann beispielsweise in Abhängigkeit von dem vom Feuchtesensor gelieferten (Feuchte-) Signal die Menge der angesaugten Frischluft gesteuert bzw. geregelt werden. Wird am Feuchtesensor ein hoher Feuchtewert gemessen, so kann vorgesehen sein, dass der angesaugte Frischluftvolumenstrom reduziert wird.

Mittels des von dem Feuchtesensor gelieferten Feuchtesignals kann durch die Elektronik der Taupunkt der Ansaugluft bestimmt werden. In Abhängigkeit des ermittelten Taupunkts kann die Fahrzeugklimaanlage von der Elektronik so geregelt bzw. gesteuert werden, dass ein Beschlagen der Scheiben des Fahrgastraums vermieden wird. Auf den bei herkömmlichen Fahrzeugklimaanlagen hierfür vorgesehenen "Beschlagsensor" könnte somit verzichtet werden.

Ein wesentlicher Vorteil der Erfindung ist auch darin zu sehen, dass mit vergleichsweise einfachen und kostengünstigen "konstruktiven Maßnahmen" ein "Wassereinbruch" in das Luftkanalsystem der Fahrzeugklimaanlage sehr zuverlässig und schnell detektierbar ist. Ein weiterer Vorteil der Erfindung ist darin zu sehen, dass sich mit diesen sehr einfachen konstruktiven Maßnahmen ein geringer Strömungswiderstand erreichen lässt; bei vorgegebener Gebläseleistung wird also ein höherer Luftvolumenstrom und somit ein besserer Wirkungsgrad erreicht.

Vorzugsweise wird der angesaugte Frischluftvolumenstrom gerade dann reduziert, wenn die Feuchtigkeit am Feuchtesensor einen vorgegebenen

Grenzwert überschreitet, z.B. wenn extrem große Feuchtigkeits- bzw. Wassermengen sensiert werden, z.B. während eines Platzregens oder beim Durchfahren einer Waschstraße. Der Grenzwert muss nicht notwendigerweise ein fest vorgegebener Wert sein. Vielmehr kann der Grenzwert von der Elektronik aus einer Grenzwertfunktion bzw. aus einem Kennfeld ermittelt werden, die bzw. das wiederum von einer Vielzahl von Parametern wie z.B. Außentemperatur, Fahrzeuggeschwindigkeit etc. abhängen kann.

Nach einer Weiterbildung der Erfindung sind der Luftfilter und/oder Anschlüsse des Stromkreisabschnitts derart beschaffen, dass der Luftfilter nur so in die Fahrzeugklimaanlage einbaubar ist, dass der Feuchtesensor stromaufwärts in Bezug auf den Luftfilter angeordnet ist. Dies kann z.B. durch eine entsprechende Gestaltung eines Rahmenelements des Luftfilters erreicht werden, dass eine eindeutige geometrische Anordnung vorsieht und einen Einbau nur dann ermöglicht, wenn der Luftfilter richtig z.B. in Bezug auf einen Strömungskanal der Klimaanlage ausgerichtet ist. Denkbar ist auch, dass elektrische Anschlüsse der Stromkreisabschnitts, die zum Anschluss an die Bordelektronik des Fahrzeugs vorgesehen sind, räumlich so angeordnet sind, dass eine elektrische Verbindung nur bei ordnungsgemäßer Orientierung des Luftfilters ermöglicht wird. Wird der Stromkreisabschnitt über ein oder mehrere elektrische Leitungen bzw. Kabel mit der Bordelektronik verbunden, so kann die Leitungs- bzw. Kabellänge so bemessen sein, dass eine elektrische Verbindung überhaupt nur bei richtiger Ausrichtung des Luftfilters möglich ist.

Bei dem Feuchtesensor kann es sich um einen Sensor handeln, der unmittelbar die Wasserbeladung der den Filter durchströmenden Luft bzw. die Wasserbeladung des Filters misst. Bei dem Sensor kann es sich beispielsweise auch um einen elektrischen Sensor handeln, dessen elektrischer Widerstand bzw. dessen Leitfähigkeit sich in Abhängigkeit von der (Luft-) Feuchtigkeit verändert.

Vorzugsweise handelt es sich jedoch um einen kapazitiven Sensor, der darauf basiert, dass sich die Kapazität in Abhängigkeit von der am Sensor vorliegenden Feuchtigkeit verändert. "Kern" eines solchen Sensors kann ein "Kondensator" mit einem Dielektrikum sein, das durch ein Keramikelement, z.B. in der Form eines Plättchens, gebildet sein kann, welches die Kapazität des Kondensators in Abhängigkeit von der Feuchtigkeitsbeladung ändert. Das Keramikelement kann durch eine Heizeinrichtung, z.B. eine elektrische Heizeinrichtung, beheizbar sein. Durch eine derartige Heizeinrichtung kann der Feuchtesensor gezielt getrocknet werden, was den Vorteil hat, dass der Feuchtesensor nach einem Feuchteeintrag relativ schnell wieder in einen einsatzbereiten Zustand gebracht werden kann.

Prinzipiell sind aber auch andere Sensorarten, z.B. optische Sensoren, geeignet.

Wie bereits erwähnt, kann das Filterelement "codiert" sein. "Codiert" bedeutet in diesem Zusammenhang, dass der Typ des verbauten Luftfilters von der Elektronik erkannt werden kann, so dass für die Elektronik z.B. erkennbar ist, ob gerade ein Partikelfilter verbaut ist, ein Kombifilter oder ein Feinstaubfilter oder ein anderer Filtertyp.

Der Filtertyp kann von der Elektronik in vielfältiger Weise "detektiert" werden. Alternativ zu den oben bereits erwähnten Methoden kann der Filtertyp auch mittels eines optoelektronischen Verfahrens von der Elektronik ermittelt werden. Denkbar ist beispielsweise, dass mittels eines optischen Sensors ein am Luftfilter vorgesehener Barcode oder die Geometrie bzw. bestimmte Teilbereiche der Geometrie des Filterelements abgetastet wird.

Alternativ dazu könnte der Leitungswiderstand bzw. der Leitwert des auf bzw. an dem Luftfilter angeordneten Feuchtesensors gemessen und auf diese Weise der Filtertyp detektiert werden. So könnte beispielsweise vorgesehen sein, dass ein Partikelfilter mit einem Feuchtesensor ausgestattet ist, der einen Leitungswiderstand im Bereich von x Ohm (z.B. 100 Ohm) aufweist, ein Kombifilter mit einem Feuchtesensor, der einen Leitungswiderstand im Bereich von y Ohm (z.B. 200 Ohm) und ein Feinstaubfilter mit einem Feuchtesensor, der einen Leitungswiderstand im Bereich von z Ohm (z.B. 300 Ohm) aufweist.

Geht man davon aus, dass der Widerstand des Feuchtesensors infolge von Feuchtigkeitsschwankungen in einer Bandbreite von z.B. 50 Ohm schwanken kann, so kann die Elektronik über die Größenordnung des Gesamtwiderstands des "Feuchtesensorstromkreises" den Filtertyp erkennen.

Ein "Wassereinbruch" in der Klimaanlage wird sich in einer vergleichsweise starken, kurzfristigen Änderung des vom Feuchtesensor gelieferten Signals bemerkbar machen. Um die normale Schwankung der Luftfeuchtigkeit von einem Wassereinbruch unterscheiden zu können, kann vorgesehen sein, dass zusätzlich zum absoluten Wert des vom Feuchtesensor gelieferten Signals der Signalgradient, d.h. die zeitlich Ableitung des Signals bzw. ein approximierter Signalgradient von der Elektronik überwacht wird, d.h. wie stark der zeitliche Anstieg bzw. der zeitliche Abfall des Signals ist.

Nach einer Weiterbildung der Erfindung weist das Luftkanalsystem ein in das Luftkanalsystem integriertes bzw. darin angeordnetes "Gebläse", z.B. ein Lüfterrad auf. Der Luftfilter kann "stromaufwärts", d.h. in Strömungsrichtung der Luft betrachtet vor dem Gebläse oder stromabwärts, d.h. in Strömungsrichtung der Luft betrachtet nach dem Gebläse angeordnet sein.

Ist der Luftfilter stromabwärts angeordnet, so werden in das Luftkanalsystem eindringende Wassertropfen durch das Gebläse in feinste Wassertröpfchen zerstäubt, was den Vorteil hat, dass der Feuchtesensor nahezu verzögerungsfrei das Eindringen von Feuchtigkeit in das Luftkanalsystem registrieren kann. Wäre der Luftfilter vor dem Gebläse angeordnet, so müsste erst ein eindringender Wassertropfen auf den Feuchtesensor auftreffen, was mit einer gewissen "Totzeit" bis zur Registrierung des Wassereinbruchs verbunden sein kann.

Eine besonders einfache und kostengünstige Möglichkeit einen Feuchtesensor dazustellen ist es, einen Metalldraht oder einen flachen Metallstreifen z.B. an einem Rahmen des Filterelements anzuordnen. Alternativ dazu könnte auch ein Metalldraht in den Rahmen des Filterelements oder direkt in das Filtermaterial integriert werden. Bei dem Material, aus dem der Draht bzw. Streifen hergestellt ist, kann es sich z.B. um Kupfer oder um eine Legierung aus unterschiedlichen Metallen handeln. Der den Feuchtesensor bildende elektrische Leiter kann z.B. über elektrische Kontakte oder über einen Stecker mit dem Bordnetz bzw. der Elektronik verbunden sein.

Zusammenfassend werden mit der Erfindung insbesondere folgende Vorteile erreicht:
- Mittels des unmittelbar auf bzw. an dem Luftfilter angeordneten Feuchtesensors kann die in der Ansaugluft enthaltene Feuchtigkeit bzw. in der Ansaugluft enthaltenes Wasser direkt und somit sehr zuverlässig detektiert werden.
- Da der Feuchtesensor unmittelbar auf bzw. an dem Luftfilter angeordnet sein kann, wird keine separate Halterung bzw. Befestigung für den Feuchtesensor benötigt.
- Über den Feuchtesensorstromkreis kann der Filtertyp codiert und somit von der Elektronik erkannt werden. In Abhängigkeit des detektierten Filtertyps kann ein in der Elektronik gespeichertes Betriebskennfeld bzw. eine entsprechende Betriebsstrategie gewählt werden.
- In Abhängigkeit des detektierten Filtertyps können Serviceintervalle automatisch korrekt gesetzt werden.
- Mittels der Elektronik kann somit auch erkannt werden, ob überhaupt ein Filter verbaut ist bzw. ob eventuell ein Filter verbaut ist, der keinen der Elektronik "bekannten" Feuchtesensor aufweist und somit zu Störungen der Fahrzeugklimaanlage führen kann. Der Verbau eines Filters und der Verbau des für die Fahrzeugklimaanlage vom Hersteller vorgesehenen Filters ist wichtig, da nur ein tatsächlich geeigneter Filter den Verdampfer der Klimaanlage zuverlässig vor einem Eintrag von Schmutz, Fasern, Partikeln oder Kupferabrieb der Kollektoren des Gebläsemotors schützen kann. Nur durch einen "passenden" Filter kann die Bildung bzw. Ansammlung von Bakterien und/oder Pilzen am Verdampfer und somit eine Geruchsbildung wirksam verhindert bzw. zumindest verzögert werden. Darüber hinaus wird der Verdampfer durch einen wirklich "passenden" Filter wesentlich besser vor einem Eintrag von Fremdpartikeln und die damit verbundene Korrosionsgefahr geschützt. Der Verbau eines vom Fahrzeughersteller vorgesehenen Luftfilters bietet aber nicht nur für den Kunden einen Vorteil, sondern auch für den Fahrzeughersteller, da es im Interesse beider Seiten ist, Reparatur- bzw. Garantiekosten möglichst zu vermeiden.

Im Folgenden wird die Erfindung im Zusammenhang mit der Zeichnung näher erläutert. Es zeigen:
- Figur 1: ein erstes Ausführungsbeispiel eines Luftfilters einer Fahrzeugklimaanlage gemäß der Erfindung;
- Figuren 2, 3: ein zweites Ausführungsbeispiel,
- Figur 4: das Grundprinzip zur Detektierung des verbauten Filtertyps und
- Figur 5: eine Skizze zur Verdeutlichung der stromaufwärtigen Anordnung des Feuchtesensors.

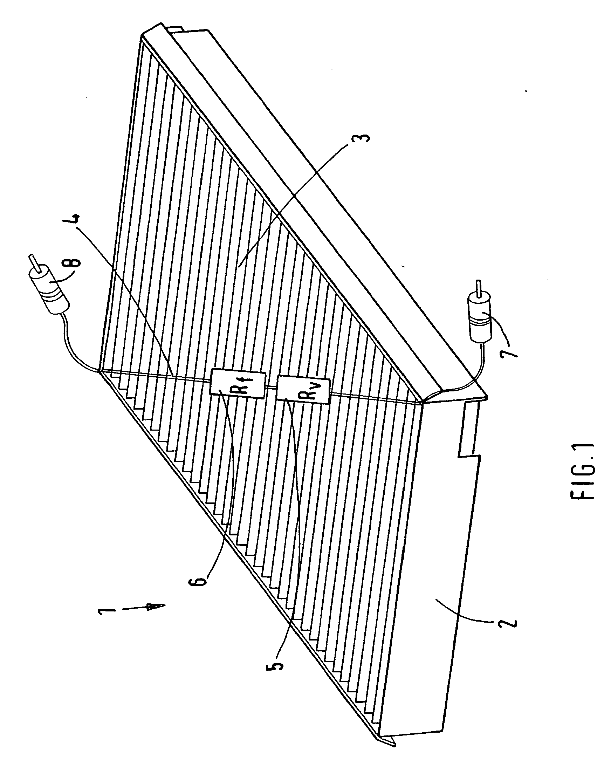

Figur 1 zeigt einen Luftfilter 1, der in einen Luftkanal, insbesondere in einen Frischluftansaugkanal einer hier nicht näher dargestellten Fahrzeugklimaanlage eingesetzt werden kann. Der Luftfilter 1 weist bei dem hier gezeigten Ausführungsbeispiel einen im Wesentlichen rechteckigen Filterrahmen 2 aus Kunststoff und ein in Zick-Zack-Faltung gefaltetes Filtervlies 3 auf.

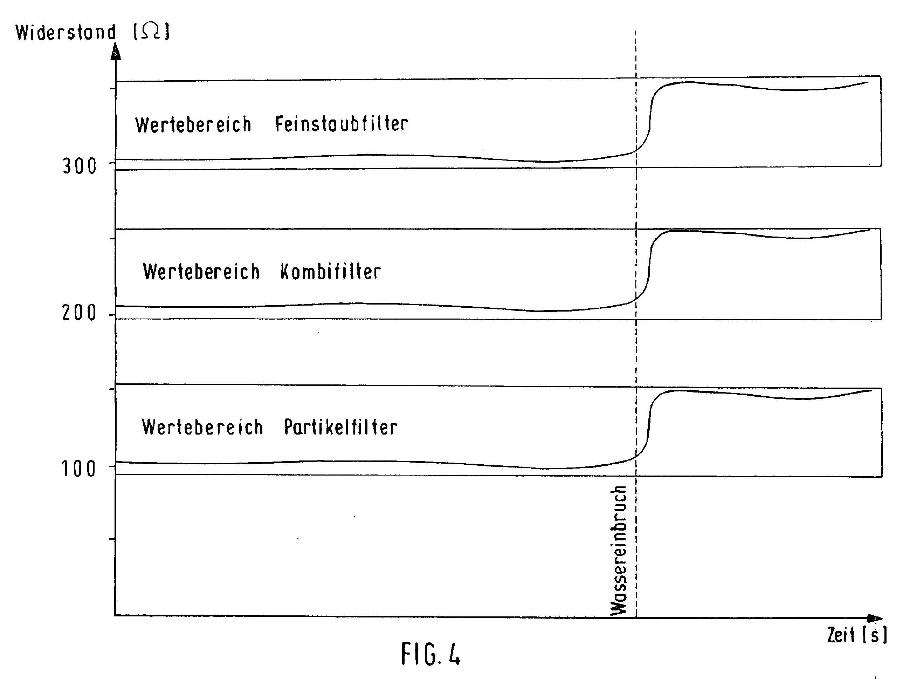

Bei dem hier gezeigten Ausführungsbeispiel erstreckt sich diagonal über den Filterrahmen, d.h. von einer Ecke des Filterrahmens zu einer diagonal gegenüberliegenden Ecke des Filterrahmens 2, ein "Diagnosekabel" 4, in das ein Vorwiderstand 5 und ein feuchtigkeitsabhängiger Widerstand 6 integriert ist. Der Vorwiderstand 5 definiert einen "Widerstandsoffset", d.h. die Größenordnung, in der der Gesamtwiderstand des Diagnosekabels 4 liegt. Anhand der Größe des Vorwiderstand 5 oder anhand der Größe des maßgeblich durch den Vorwiderstand 5 bestimmten Gesamtwiderstandes des "Diagnosestromkreises" kann die Elektronik also den vorliegenden Filtertyp detektieren, was in Zusammenhang mit Figur 4 noch näher erläutert wird. Der Gesamtwiderstand ergibt sich bei der in Figur 1 gezeigten Serienschaltung der beiden Widerstände 5, 6 aus der Summe der beiden Widerstände. Der Gesamtwiderstand ist somit abhängig von der Feuchtigkeitsbeladung am Widerstand 6.

Bei dem in Figur 1 gezeigten Ausführungsbeispiel ist das Diagnosekabel 4 über zwei zugeordnete Stecker 7, 8, mit einer hier nicht näher dargestellten Auswerteelektronik verbunden.

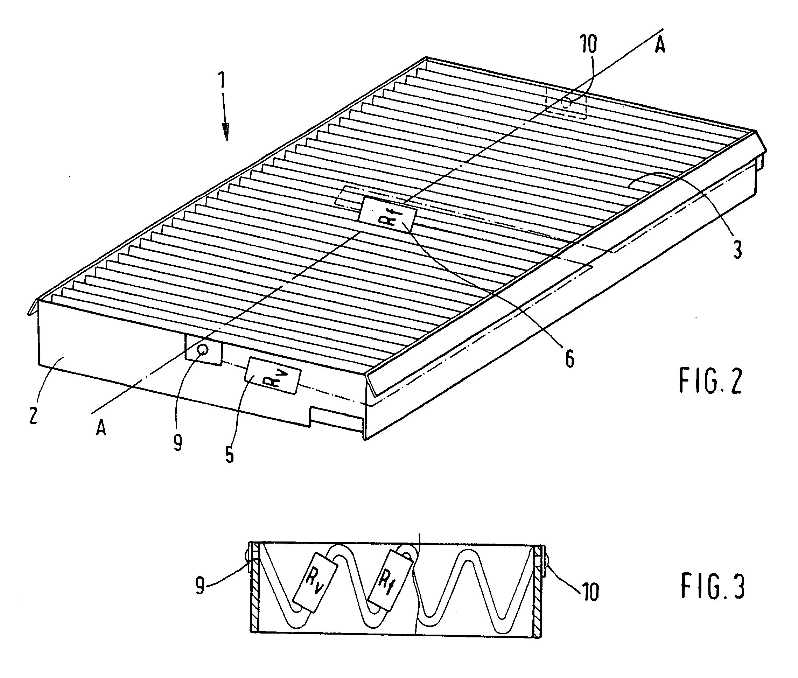

Die Figuren 2, 3 zeigen eine Variante des Ausführungsbeispiels der Figur 1. Anstatt über Stecker ist die durch die beiden Widerstände 5, 6 gebildete Serienschaltung über Kontakte 9, 10, die seitlich am Rahmen 2 des Luftfilters 1 vorgesehen sind, elektrisch mit der Auswerteelektronik verbunden. Das "Diagnosekabel" kann z.B. durch eine Kupferfolie gebildet sein, die am Filterrahmen 2 angeordnet oder in den Filterrahmen 2 und/oder in das Filtervlies 3 integriert ist.

Figur 4 beschreibt, wie über den Widerstand der Feuchtigkeitssensoranordnung verschiedene Filtertypen codiert werden können. Beispielsweise kann vorgesehen sein, dass der elektrische Widerstand bei einem ersten Filtertyp (z.B. Partikelfilter) bei sehr geringer Feuchtigkeitsbeladung im Bereich von 100 Ohm und bei maximaler Feuchtigkeitsbeladung im Bereich von 150 Ohm liegt. Detektiert die Auswerteelektronik einen Gesamtsensorwiderstand im Bereich zwischen 100 und 150 Ohm, so kann daraus geschlossen werden, dass ein Partikelfilter verbaut ist. Dementsprechend können beispielsweise ein Kombifilter und ein Feinstaubfilter durch die Wertebereiche 200 Ohm bis 250 Ohm bzw. 300 Ohm und 350 Ohm codiert werden.

Darüber hinaus kann vorgesehen sein, dass die Auswerteelektronik nicht nur den momentan vorliegenden Gesamtwiderstand der Sensoranordnung misst, sondern auch den Gradienten des Sensorsignals, d.h. die zeitliche Änderung des Widerstands. Bei einem starken Gradienten kann darauf geschlossen werden, dass gerade ein "Wassereinbruch" vorliegt oder endet.

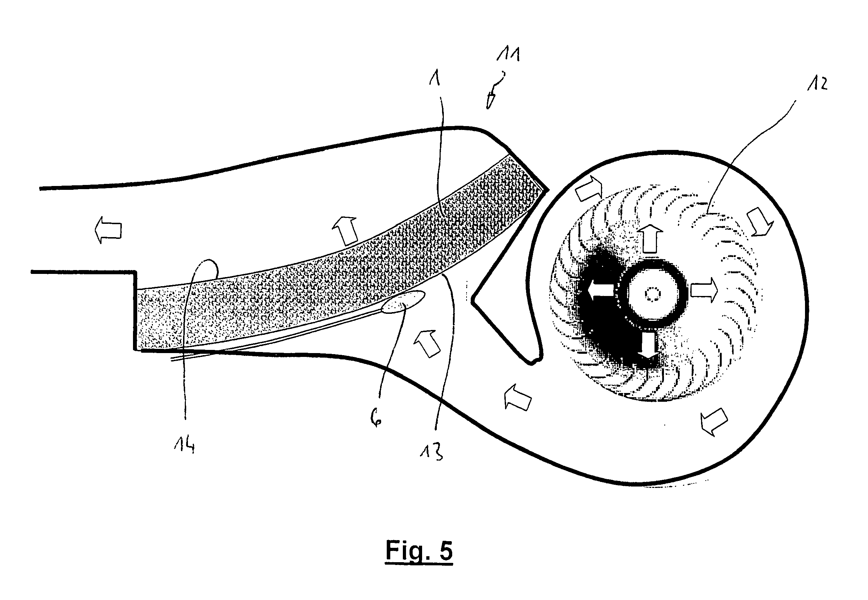

Figur 5 zeigt einen Querschnitt durch einen Strömungskanal 11 einer Fahrzeugklimaanlage. In der Strömungskanalanordnung ist ein Gebläse 12 angeordnet, das Luft, insbesondere Umgebungsluft, ansaugt und in Richtung zu einem ebenfalls in der Strömungskanalanordnung angeordneten Luftfilter 1 bläst bzw. fördert. Der Luftfilter 1 weist eine "stromaufwärtige Seite" 13 und eine "stromabwärtige Seite" 14 auf. Der Feuchtesensor 6 ist auf der stromaufwärtigen Seite 13 des Luftfilters 1, d.h. auf der "Druckseite" oder der dem Gebläse 12 zugewandten Seite des Luftfilters 1 angeordnet.

## Patentansprüche

1. Luftfilter (1), der für einen Einbau in eine Fahrzeugklimaanlage vorgesehen ist, wobei auf bzw. an dem Luftfilter (1) ein Stromkreisabschnitt (4
- 8) vorgesehen ist, der einen Feuchtesensor (6) aufweist bzw. der durch einen Feuchtesensor (6) gebildet ist,
**dadurch gekennzeichnet, dass**
mindestens eine elektrische Eigenschaft des Stromkreisabschnitts den Typ des Luftfilters (1) repräsentiert.

2. Luftfilter (1) nach Anspruch 1, **dadurch gekennzeichnet, dass** der Feuchtesensor (6) ein kapazitiver Sensor (6) ist, dessen Kapazität von der Feuchtigkeitsbeladung der ihn umströmenden bzw. umgebenden Luft abhängt.

3. Luftfilter (1) nach Anspruch 1 oder 2, **dadurch gekennzeichnet, dass** dem Typ des Luftfilters (1) ein vorgegebener Wertebereich zugeordnet ist, in dem die elektrische Eigenschaft seines Stromkreisabschnitts (4 - 8) liegen darf.

4. Luftfilter (1) nach Anspruch 3, **dadurch gekennzeichnet, dass** der Wertebereich so gewählt ist, dass im Normalbetrieb des Luftfilters (1) auftretende Schwankungen der elektrischen Eigenschaft des Stromkreisabschnitts (4 - 8) innerhalb des vorgegebenen Wertebereichs liegen.

5. Luftfilter (1) nach Anspruch 4, **dadurch gekennzeichnet, dass** der Wertebereich ein Frequenzbereich bzw. ein Amplitudenbereich bei einem vorgegebenen Frequenzbereich ist.

6. Luftfilter (1) nach einem der Ansprüche 1 bis 5, **dadurch gekennzeichnet, dass** die elektrische Eigenschaft die Größenordnung der Eigenfrequenz des Stromkreisabschnitts (4 - 8) und/oder des ohmschen und/oder des induktiven und/oder des kapazitiven Widerstands des Stromkreisabschnitts (4 - 8) ist.

7. Luftfilter (1) nach einem der Ansprüche 1 bis 6, **dadurch gekennzeichnet, dass** der Feuchtesensor (6) ein durch ein Keramikelement gebildetes Dielektrikum aufweist.

8. Luftfilter (1) nach einem der Ansprüche 1 bis 7, **dadurch gekennzeichnet, dass** eine Heizeinrichtung vorgesehen ist, mittels der der Feuchtesensor beheizt und/oder getrocknet werden kann.

9. Fahrzeugklimaanlage, mit einem Luftfilter (1) nach einem der Ansprüche 1 bis 8.

10. Fahrzeugklimaanlage nach Anspruch 9, **dadurch gekennzeichnet, dass** der Stromkreisabschnitt an eine außerhalb des Luftfilters (1) angeordnete Elektronik angeschlossen ist, welche die Eigenfrequenz des Stromkreisabschnitts (4 - 8) bzw. eines Stromkreises, welcher den auf bzw. an dem Luftfilter (1) angeordneten Stromkreisabschnitt (4 - 8) umfasst, ermittelt, und anhand der Größenordnung der ermittelten Eigenfrequenz den Typ des Luftfilters (1) ermittelt.

11. Fahrzeugklimaanlage nach Anspruch 9 oder 10, **dadurch gekennzeichnet, dass** der Feuchtesensor (6) stromaufwärts in Bezug auf den Luftfilter (1) angeordnet ist.

12. Fahrzeugklimaanlage nach einem der Ansprüche 9 bis 11, **dadurch gekennzeichnet, dass** der Luftfilter (1) und/oder Anschlüsse des Stromkreisabschnitts derart beschaffen sind, dass der Luftfilter (1) nur so in die Fahrzeugklimaanlage einbaubar ist, dass der Feuchtesensor (6) stromaufwärts in Bezug auf den Luftfilter (1) angeordnet ist.

13. Fahrzeugklimaanlage nach einem der Ansprüche 9 bis 12, **dadurch gekerinzeichnet, dass** der Feuchtesensor (6) ein Signal liefert, das mit der Feuchtigkeitsbeladung des Luftfilters (1) korreliert.

14. Fahrzeugklimaanlage nach einem der Ansprüche 9 bis 13, **dadurch gekennzeichnet, dass** zumindest ein Funktionsparameter der Fahrzeugklimaanlage in Abhängigkeit von dem von dem Feuchtesensor (6) gelieferten Signal bzw. in Abhängigkeit des anhand der ermittelten Eigenfrequenz ermittelten Typs des Luftfilters (1) gesteuert bzw. geregelt wird.

15. Fahrzeugklimaanlage nach einem der Ansprüche 9 bis 14,
**dadurch gekennzeichnet, dass** die Elektronik zumindest in manchen Betriebszuständen der Fahrzeugklimaanlage den Volumenstrom der von der Fahrzeugklimaanlage angesaugten Frischluft in Abhängigkeit von dem von dem Feuchtesensor (6) gelieferten Signal steuert bzw. regelt.

16. Fahrzeugklimaanlage nach einem der Ansprüche 9 bis 15,
**dadurch gekennzeichnet, dass** die Elektronik zumindest einen Funktionsparameter der Fahrzeugklimaanlage in Abhängigkeit von der zeitlichen Änderung des vom Feuchtesensor (6) gelieferten Signals, insbesondere in Abhängigkeit des Gradienten des vom Feuchtesensor (6) gelieferten Signals, steuert bzw. regelt.

17. Verfahren zum Betreiben einer Fahrzeugklimaanlage, die einen Luftfilter (1) mit einem auf bzw. an dem Luftfilter angeordneten Feuchtesensor (6) aufweist, wobei der Feuchtesensor (6) ein Bestandteil eines auf bzw. an dem Luftfilter (1) angeordneten Stromkreisabschnitts (4 - 8) ist, und wobei der Feuchtesensor (6) bzw. der Stromkreisabschnitt ein Feuchtesignal erzeugt, welches einer Elektronik zugeführt wird,
**dadurch gekennzeichnet, dass**
die Elektronik anhand der Größenordnung einer Signaleigenschaft des Feuchtesignals den Typ des Luftfilters (1) ermittelt.

18. Verfahren nach Anspruch 17, **dadurch gekennzeichnet, dass** dem Typ des Luftfilters (1) ein vorgegebener Wertebereich zugeordnet ist, in dem die Signaleigenschaft liegen darf.

19. Verfahren nach Anspruch 18, **dadurch gekennzeichnet, dass** der Wertebereich so gewählt ist, dass im Normalbetrieb des Luftfilters (1) durch Feuchteänderungen hervorgerufene Schwankungen der Signaleigenschaft innerhalb des vorgegebenen Wertebereichs liegen.

20. Verfahren nach einem der Ansprüche 17 bis 19, **dadurch gekennzeichnet, dass** die Elektronik die Größenordnung der Eigenfrequenz des Feuchtesensors (6) bzw. eines Stromkreises, der den Feuchtesensor (6) enthält, bestimmt, und daraus den Typ des Luftfilters (1) ermittelt.

21. Verfahren nach einem der Ansprüche 17 bis 20, **dadurch gekennzeichnet, dass** die Elektronik die zeitliche Änderung des Feuchtesignals bzw. einer Signaleigenschaft des Feuchtesignals überwacht und in Abhängigkeit davon mindestens einen Funktionsparameter der Fahrzeugklimaanlage steuert bzw. regelt.

## Claims

1. An air filter (1) for incorporation in a vehicle air-conditioning system, wherein an electric circuit portion (4-8) is provided on or at the air filter (1) and comprises or is in the form of a humidity sensor (6),
**characterised in that**
at least one electric characteristic of the circuit portion represents the type of the air filter (1).

2. An air filter (1) according to claim 1, **characterised in that** the humidity sensor (6) is a capacitive sensor (6), its capacitance depending on the load of moisture in the surrounding air.

3. An air filter (1) according to claim 1 or claim 2,
**characterised in that** the type of the air filter (1) is assigned a set range of values within which the electric characteristic of its circuit portion (4-8) must lie.

4. An air filter (1) according to claim 3, **characterised in that** the range of values is chosen so that during normal operation of the filter (1), fluctuations in the electric characteristic of the circuit portion (4-8) lie within the set range.

5. An air filter (1) according to claim 4, **characterised in that** the range of values is a frequency range or an amplitude range at a given frequency range.

6. An air filter (1) according to claims 1 to 5, **characterised in that** the electric characteristic is the measured natural frequency of the circuit portion (4-8) and/or of the ohmic and/or inductive and/or capacitive resistance of the circuit portion (4-8).

7. An air filter (1) according to any of claims 1 to 6, **characterised in that** the humidity sensor (6) comprises a dielectric in the form of a ceramic element.

8. An air filter (1) according to any of claims 1 to 7, **characterised in that** a heater is provided for heating and/or drying the humidity sensor.

9. A vehicle air-conditioning system comprising an air filter (1) according to any of claims 1 to 8.

10. A vehicle air-conditioning system according to claim 9, **characterised in that** the circuit portion is connected to an electronic unit disposed outside the air filter (1) and measuring the natural frequency of the circuit portion (4-8) or of a circuit comprising the portion (4-8) disposed on or at the air filter (1), and uses the measured natural frequency to determine the type of the air filter (1).

11. A system according to claim 9 or claim 10, **characterised in that** the humidity sensor (6) is disposed upstream of the air filter (1).

12. A vehicle air-conditioning system according to any of claims 9 to 11, **characterised in that** the air filter (1) and/or connections to the circuit portion are designed so that the air filter (1) in the vehicle air-conditioning system must be incorporated so that the humidity sensor (6) is disposed upstream of the air filter (1).

13. A system according to any of claims 9 to 12, **characterised in that** the humidity sensor (6) delivers a signal correlated with the load of moisture on the air filter (1).

14. A system according to any of claims 9 to 13, **characterised in that** at least one functional parameter of the vehicle air-conditioning system can be controlled in an open or closed loop in dependence on the signal delivered by the humidity sensor (6) or in dependence on the type of air filter (1) determined from the measured characteristic.

15. A system according to any of claims 9 to 14, **characterised in that** at least in many operating states of the system, the electronic unit determines the flow rate of fresh air sucked in by the air-conditioning system in dependence on the signal delivered by the humidity sensor (6).

16. A system according to any of claims 9 to 15, **characterised in that** the electronic unit, in an open or closed loop, controls at least one functional parameter of the air-conditioning system in dependence on the variation in time of the signal delivered by the humidity sensor (6), especially in dependence on the gradient of the signal delivered by the humidity sensor (6).

17. A method of operating a vehicle air-conditioning system comprising an air filter (1) with a humidity sensor (6) disposed on or at the filter, wherein the humidity sensor (6) is a component of a circuit portion (4-8) disposed on or at the filter (1) and wherein the humidity sensor (6) or the circuit portion generates a humidity signal which is supplied to an electronic unit,
**characterised in that**
the electronic unit uses the measurement of a characteristic of the humidity signal to determine the type of the air filter (1).

18. A method according to claim 17, **characterised in that** the type of the air filter (1) is assigned a set range of values within which the signal characteristic must lie.

19. A method according to claim 18, **characterised in that** the range of values is chosen so that during normal operation of the air filter (1), fluctuations in the signal characteristic due to changes in humidity lie within the set range of values.

20. A method according to any of claims 17 to 19, **characterised in that** the electronic unit uses the measured natural frequency of the humidity sensor (6) or of a circuit containing the humidity sensor (6) to determine the type of the air filter (1).

21. A method according to any of claims 17 to 20, **characterised in that** the electronic unit monitors the variation in time of the humidity signal or of a property thereof and uses it to control at least one functional parameter of the vehicle air-conditioning system in an open or closed loop.

## Revendications

1. Filtre à air (1) destiné à être monté dans une installation de climatisation de véhicule,
- le filtre à air (1) étant équipé d'un segment de circuit électrique (4-8) comportant un capteur d'humidité (6) ou étant constitué par un capteur d'humidité (6),
filtre à air **caractérisé en ce qu'**
au moins une propriété électrique du segment de circuit électrique représente le type de filtre à air (1).

2. Filtre à air (1) selon la revendication 1,
**caractérisé en ce que**
le capteur d'humidité (6) est un capteur capacitif (6) dont la capacité dépend de la charge d'humidité de l'air de passage ou de l'air ambiant.

3. Filtre à air (1) selon la revendication 1 ou 2,
**caractérisé en ce qu'**
une plage de valeur prédéfinie est associée au type de filtre à air (1), plage dans laquelle peut se situer la caractéristique électrique de son segment de circuit électrique (4-8).

4. Filtre à air (1) selon la revendication 3,
**caractérisé en ce que**
la plage de valeur est choisie pour qu'en fonctionnement normal du filtre à air (1), les oscillations de la caractéristique électrique du segment de circuit électrique (4-8) se situent dans la plage de valeur, prédéfinie.

5. Filtre à air (1) selon la revendication 4,
**caractérisé en ce que**
la plage de valeur est une plage de fréquence ou une plage d'amplitude pour une plage de fréquence prédéfinie.

6. Filtre à air (1) selon l'une des revendications 1 à 5,
**caractérisé en ce que**
la propriété électrique est de l'ordre de grandeur de la fréquence propre du segment de circuit électrique (4-8) et/ou de la résistance ohmique et/ou de l'inductance et/ou de la capacité du segment de circuit électrique (4-8).

7. Filtre à air (1) selon l'une des revendications 1 à 6,
**caractérisé en ce que**
le capteur d'humidité (6) comporte un diélectrique formé par un élément en céramique.

8. Filtre à air (1) selon l'une des revendications 1 à 7,
**caractérisé par**
une installation de chauffage pour chauffer le capteur d'humidité et/ou le sécher.

9. Installation de climatisation de véhicule équipé d'un filtre à air (1) selon l'une des revendications 1 à 8.

10. Installation de climatisation de véhicule selon la revendication 9, **caractérisée en ce que**
le segment de circuit de courant est relié à un circuit électronique extérieur au filtre (1) qui détermine la fréquence propre du segment de circuit électrique (4-8) ou du circuit électrique comportant le segment de circuit électrique (4-8) du filtre à air (1) et il détermine le type de filtre à air (1) à l'aide de l'ordre de grandeur de la fréquence propre obtenue.

11. Installation de climatisation de véhicule selon la revendication 9 ou 10,
**caractérisée en ce que**
le capteur d'humidité (6) est installé en amont du filtre à air (1).

12. Installation de climatisation de véhicule selon l'une des revendications 9 à 11,
**caractérisée en ce que**
le filtre à air (1) et/ou les branchements du segment de circuit électrique sont conçus pour que le filtre à air (1) ne puisse être monté dans l'installation de climatisation de véhicule que si le capteur d'humidité (6) est en amont du filtre à air (1).

13. Installation de climatisation de véhicule selon l'une des revendications 9 à 12,
**caractérisée en ce que**
le capteur d'humidité (6) fournit un signal en corrélation avec la charge d'humidité du filtre à air (1).

14. Installation de climatisation de véhicule selon l'une des revendications 9 à 13,
**caractérisée par**
au moins un paramètre fonctionnel de l'installation de climatisation qui est commandé ou régulé en fonction du signal fourni par le capteur d'humidité (6) ou en fonction du type de filtre à air (1) déterminé à partir de la fréquence propre obtenue.

15. Installation de climatisation de véhicule selon l'une des revendications 9 à 14,
**caractérisée en ce que**
dans au moins certains états de fonctionnement de l'installation de climatisation de véhicule, l'électronique commande ou régule le débit volumique de l'air frais aspiré par l'installation de climatisation du véhicule en fonction du signal fourni par le capteur d'humidité (6).

16. Installation de climatisation de véhicule selon l'une des revendications 9 à 15,
**caractérisée en ce que**
le circuit électronique commande ou régule au moins un paramètre de fonctionnement de l'installation de climatisation du véhicule en fonction de la variation dans le temps du signal fourni par le capteur d'humidité (6), notamment en fonction du gradient du signal fourni par le capteur d'humidité (6).

17. Procédé de gestion d'une installation de climatisation de véhicule comportant un filtre à air (1) équipé d'un capteur d'humidité (6) installé dans ou sur le filtre à air,
* le capteur d'humidité (6) faisant partie d'un segment de circuit électrique (4-8) installé dans ou sur le filtre à air (1), et
* le capteur d'humidité (6) ou le segment de circuit électrique générant
un signal d'humidité fourni au circuit électronique,
procédé **caractérisé en ce que**
le circuit électronique détermine le type de filtre à air (1) à partir de l'ordre de grandeur d'une propriété du signal d'humidité.

18. Procédé selon la revendication 17,
**caractérisé en ce qu'**
une plage de valeur prédéfinie est associée au type de filtre à air (1), plage dans laquelle peut se situer la caractéristique du signal.

19. Procédé selon la revendication 18,
**caractérisé en ce qu'**
on choisit la plage de valeur pour qu'en mode de fonctionnement normal du filtre à air (1), les variations de la caractéristique du signal engendrées par les variations d'humidité se situent dans la plage de valeur prédéfinie.

20. Procédé selon l'une des revendications 17 à 19,
**caractérisé en ce que**
le circuit électronique détermine l'ordre de grandeur de la fréquence propre du capteur d'humidité (6) ou du circuit électrique équipant le capteur d'humidité (6) pour en déduire le type de filtre à air (1).

21. Procédé selon l'une des revendications 17 à 20,
**caractérisé en ce que**
le circuit électronique surveille la variation du signal d'humidité ou d'une propriété du signal d'humidité en fonction du temps et à partir de là, le circuit commande ou régule au moins un paramètre de fonctionnement de l'installation de climatisation du véhicule.
